# EUROPEAN PATENT SPECIFICATION

(11) **EP 4 381 027 B1**
(45) Date of publication and mention of the grant of the patent: **30.07.2025**
(21) Application number: 22737929.4
(22) Date of filing: 20.06.2022
(51) Int. Cl.: C10B 47/40, C10B 53/00, C10B 53/02, C10L 9/08

(54) **A PROCESSING DEVICE FOR TEMPERATURE TREATMENT**
VERARBEITUNGSVORRICHTUNG ZUR TEMPERATURBEHANDLUNG
DISPOSITIF DE TRAITEMENT DESTINÉ AU TRAITEMENT THERMIQUE

(30) Priority: 03.08.2021 FI 20215833
(43) Date of publication of application: 12.06.2024
(73) Proprietor: Dreamsoft OY, 15230 Lahti (FI)
(72) Inventor: JÄRVINEN, Emil, 15230 LAHTI (FI)
(74) Representative: Väänänen, Janne Kalervo
(86) International application number: PCT/FI2022/050434
(87) International publication number: WO 2023/012401

(56) References cited:
- DE-A1- 2 611 693
- DE-A1- 3 424 491
- US-A1- 2005 240 068

## Description

### Field of the disclosure

The disclosure relates generally to temperature treatment that can be for example pyrolysis, torrefaction, or any other heat treatment, as well as cold treatment. More particularly, the disclosure relates to a processing device for temperature treatment. Furthermore, the disclosure relates to a method for temperature treatment.

### Background

In many cases, processing of materials such as wood or other biological material comprises temperature treatment that can be for example pyrolysis, torrefaction, or any other heat treatment, as well as cold treatment. Pyrolysis is thermal decomposition of materials at elevated temperatures in an inert gas-content environment. Pyrolysis is commonly used in treatment of organic materials such as wood. It is one of the processes involved in charring wood. In general, pyrolysis of organic substances produces volatile products and leaves a solid residue enriched in carbon called charcoal. Extreme pyrolysis, which leaves mostly carbon as the residue, is called carbonization. Torrefaction of biomass, e.g. wood or grain, is a mild form of pyrolysis at temperatures typically between 200 and 320 °C. Torrefaction is typically carried out under normal atmospheric pressure and in the absence of oxygen, i.e. with no air. During the torrefaction process, water contained in the biomass as well as superfluous volatiles are released, and the biopolymers such as cellulose, hemicellulose, and lignin partly decompose, giving off various types of volatiles. The final product is solid, dry, and blackened material that is referred to as torrefied biomass or bio-coal. Many biomass fuels, regardless of their origins, produce torrefied products with similar properties - except for ash properties which largely reflect the original fuel ash content and composition. Thus, torrefaction can be used for obtaining homogeneous product composition regardless of origin of starting biomaterials. Furthermore, torrefied biomass has hydrophobic properties, i.e. repels water, which facilitates storage.

A processing device for temperature treatment of the kind discussed above comprises typically a treatment chamber whose gas-content and temperature can be controlled. In many cases, a temperature treatment process is wanted to be a continuous process where material to be treated is continuously or nearly continuously supplied to an inlet of a processing device and the temperature treated material is continuously of nearly continuously taken out from an outlet of the processing device. The processing device comprises conveying means such as a conveyor belt or a screw conveyor which transfer the material to be treated from the inlet to the outlet. The temperature treatment, e.g. pyrolysis or torrefaction, takes place during the transfer. Publication CN212864670 describes a processing device for preparing charcoal, wood tar, wood vinegar, and heat energy through biomass pyrolysis carbonization.

An inherent challenge related to many processing devices of the kind mentioned above is that the conveying means require room and thus the volume of a room whose temperature and gas-content are to be controlled can be so large that the control is complicated and slow to react to required changes. The documents DE 26 11 693 A1, DE 34 24 491 A1, and US 2005/240068 A1 disclose processing devices and methods according to the state of the art.

### Summary

The following presents a simplified summary in order to provide a basic understanding of some embodiments of the invention. The summary is not an extensive overview of the invention. It is neither intended to identify key or critical elements of the invention nor to delineate the scope of the invention, which is defined in the appended claims. The following summary merely presents some concepts of the invention in a simplified form as a prelude to a more detailed description of exemplifying embodiments of the invention. In this document, the word "geometric" when used as a prefix means a geometric concept that is not necessarily a part of any physical object. The geometric concept can be for example a geometric point, a straight or curved geometric line, a geometric plane, a non-planar geometric surface, a geometric room, or any other geometric entity that is zero, one, two, or three dimensional.

In accordance with the invention, there is provided a new processing device for temperature treatment of materials. The temperature treatment can be for example pyrolysis, torrefaction, or any other heat treatment, as well as cold treatment.

A processing device according to the invention comprises:
- wall structures defining an interior room,
- a temperature control device configured to control temperature of a treatment room being a part of the interior room,
- an inlet configured to supply material to be treated to a first end of the treatment room,
- a conveyor belt constituting a closed loop and configured to transfer the material inside the treatment room from the first end of the treatment room to a second end of the treatment room, and
- an outlet configured to remove the temperature treated material from the second end of the treatment room.

The above-mentioned interior room contains a drive mechanism configured to drive the conveyor belt. The drive mechanism comprises a first wheel supporting the conveyor belt at the first end of the treatment room and a second wheel supporting the conveyor belt at the second end of the treatment room. The wall structures are configured to exclude a room being between the first and second wheels out from the interior room to make the interior room smaller and thereby to facilitate temperature control as well as possible gas-content control of the treatment room. The wall structures are configured to constitute a first tubular part containing a first part of the conveyor belt being between the first and second wheels and a second tubular part containing a second part of the conveyor belt being between the first and second wheels, the first tubular part forming at least a part of the treatment room.

In this document, the word "room" means a three-dimensional spatial area. In this document, the word "gas-content" means gas or gases which are present in a room under consideration.

In accordance with the invention, there is also provided a new method for temperature treatment of material. A method according to the invention comprises:
- supplying the material to an inlet of a processing device according to the invention for temperature treatment, and
- receiving the temperature treated material from an outlet of the processing device.

In a method according to an exemplifying and non-limiting embodiment, the material supplied to the inlet of the processing device is wood and the temperature treated material received from the outlet of the processing device is charcoal.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of also un-recited features.

The features recited in the accompanied dependent claims are mutually freely combinable unless otherwise explicitly stated.

Furthermore, it is to be understood that the use of "a" or "an", i.e. a singular form, throughout this document does not exclude a plurality.

### Brief description of the figures

Exemplifying and non-limiting embodiments and their advantages are explained in greater details below in the sense of examples and with reference to the accompanying drawings, in which:
figures 1a and 1b illustrate a processing device according to an exemplifying and non-limiting embodiment,
figure 2 illustrates a detail of a processing device according to an exemplifying and non-limiting embodiment,
figures 3a, 3b, and 3c illustrate a detail of a processing device according to an exemplifying and non-limiting embodiment, and
figure 4 shows a flowchart of a method according to an exemplifying and non-limiting embodiment for temperature treatment of material.

### Description of exemplifying embodiments

The specific examples provided in the description below should not be construed as limiting the scope and/or the applicability of the accompanied claims. Lists and groups of examples provided in the description are not exhaustive unless otherwise explicitly stated.

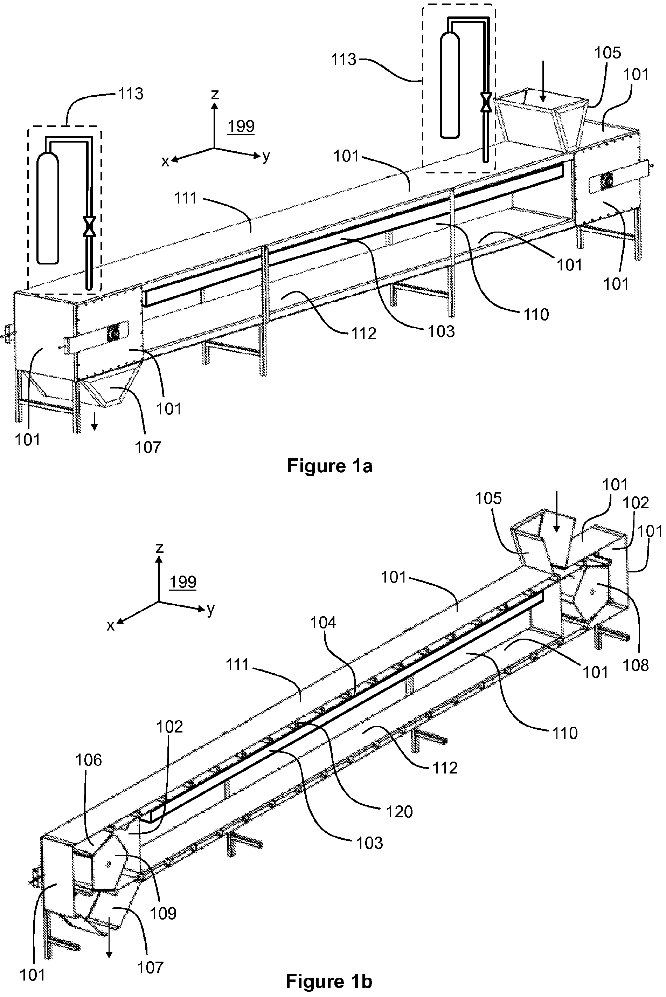

Figure 1a shows a processing device according to an exemplifying and non-limiting embodiment for temperature treatment. Figure 1b shows a section of the processing device so that the geometric section plane is parallel with the xz-plane of a coordinate system 199. The processing device comprises wall structures 101 which define an interior room 102. The processing device comprises a temperature control device 103 configured to control temperature of a treatment room 104 that is a part of the interior room 102. The temperature control device 103 can be a heater that may comprise for example gas or oil burners, or an electrical heater. In an exemplifying case in which the processing device is a cold treatment device, the temperature control device 103 can be an electrical cooler. The processing device comprises an inlet 105 that is configured to supply material to be treated to a first end of the treatment room 104. The material to be treated can be fort example biological material such as wood. The processing device comprises a conveyor belt 106 that constitutes a closed loop and is configured to transfer the material inside the treatment room 104 from the first end of the treatment room 104 to a second end of the treatment room 104. The processing device comprises an outlet 107 configured to remove the temperature treated material from the second end of the treatment room 104. The interior room 102 contains a drive mechanism configured to drive the conveyor belt 106. The drive mechanism comprises a first wheel 108 supporting the conveyor belt 106 at the first end of the treatment room 104 and a second wheel 109 supporting the conveyor belt 106 at the second end of the treatment room 104. The wall structures 101 of the processing device are configured to exclude a room 110 that is between the above-mentioned first and second wheels 108 and 109 out from the interior room 102 room to make the interior room 102 smaller and thereby to facilitate temperature control as well as possible gas-content control of the treatment room 104. The processing device may further comprise a motor system connected to the first and/or second wheels 108 and 109. The motor system is not shown in figures 1a and 1b. It is also possible that a processing device according to an exemplifying and non-limiting embodiment can be connected to an external motor system.

In the exemplifying processing device illustrated in figures 1a and 1b, the temperature control device 103 is located outside the interior room 102 and between the first and second wheels 108 and 109. The temperature control device 103 is configured to be in a heat transfer connection with the treatment room 104. It is also possible that a temperature control device of a processing device according to an exemplifying and non-limiting embodiment is inside the treatment room 104, e.g. below or above the conveyor belt.

In the exemplifying processing device illustrated in figures 1a and 1b, the wall structures 101 are configured to constitute a first tubular part 111 containing a first part, i.e. an upper part, of the conveyor belt 106 being between the first and second wheels 108 and 109 and a second tubular part 112 containing a second part, i.e. a lower part, of the conveyor belt 106 being between the first and second wheels 108 and 109. As shown in figures 1a and 1b, the first tubular part 112 forms at least a part of the treatment room 104.

A processing device according to an exemplifying and non-limiting embodiment comprises a gas-content control system 113 configured to control gas-content inside the treatment room 104. Typically, the gas-content of the treatment room 104 is a low-oxygen or an oxygen-free gas-content. In the exemplifying processing device illustrated in figures 1a and 1b, the gas-content control system 113 comprises pressurized gas bottles configured supply, to the interior room 102, gas representing a desired gas-content inside the treatment room 104. The gas supplied to the interior room 102 may comprise for example nitrogen, carbon dioxide, helium, and/or argon.

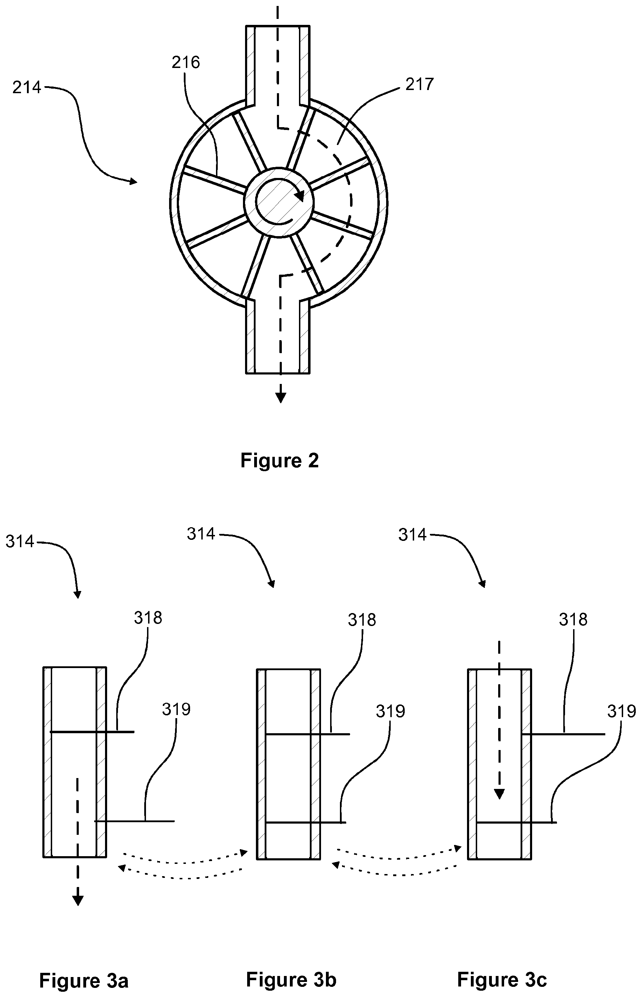

In a processing device according to an exemplifying and non-limiting embodiment, the inlet comprises a first closing system configured to close the inlet to reduce gas leakage to and from the interior room 102, and the outlet comprises a second closing system configured to close the outlet to reduce gas leakage to and from the interior room 102. The first and second closing systems are not shown in figures 1a and 1b. Each of the first and second closing systems can be for example such as the closing system 214 whose section view is shown in figure 2, or each of the first and second closing systems can be for example such as the closing system 314 whose section view is shown in figures 3a, 3b, and 3c. The closing system 214 illustrated in figure 2 comprises a paddlewheel 216 placed in a cylindrical chamber 217 so that tips of vanes of the paddlewheel move along a wall of the cylindrical chamber 217 when the paddlewheel 216 rotates. The cylindrical chamber 217 has a supply aperture for receiving material and an exit aperture for removing the material from the cylindrical chamber 217. Figure 2 illustrates a situation in which the paddlewheel 216 rotates in a clockwise direction. Material flow is depicted with an arrow-headed dashed line. As shown in figure 2, there is no direct flow path through the closing system 214. The closing system 314 illustrated in figures 3a-3c comprises plates 318 and 319 which are operated cyclically so that, at each time, only one of the plates 318 and 319 is in an open position or both the plates 318 and 319 are in a closed position. Figures 3a-3c show different operational phases of the closing system 314. Arched dot-line arrows show transitions between these operational phases. As shown in figures 3a-3c, there is no direct flow path through the closing system 314.

In a processing device according to an exemplifying and non-limiting embodiment, the conveyor belt comprises transverse ridges configured to push the material to be treated in a moving direction of the conveyor belt. In figure 1b, one of the transverse ridges of the conveyor belt 106 is denoted with a reference 120. It is also possible that sides of the conveyor belt 106 are provided with rims so that the conveyor belt 106 comprises trough-like elements that are successively in the direction of movement.

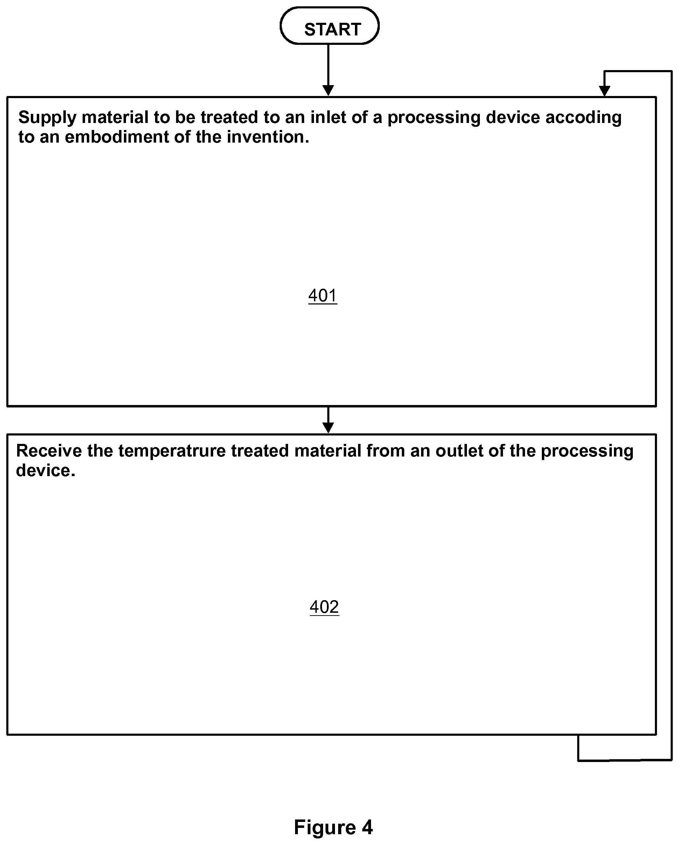

Figure 4 shows a flowchart of a method according to an exemplifying and non-limiting embodiment for temperature treatment of material. The method comprises the following actions:
- action 401: supplying the material to be treated to an inlet of a processing device according to an embodiment of the invention for temperature treatment, and
- action 402: receiving the temperature treated material from an outlet of the processing device.

The processing device can be for example such as illustrated in figures 1a and 1b. In a method according to an exemplifying and non-limiting embodiment, the material supplied to the inlet of the processing device is wood and the temperature treated material received from the outlet of the processing device is charcoal.

In a method according to an exemplifying and non-limiting embodiment, a temperature control device of the processing device is located outside a treatment room in which the temperature treatment takes place and between first and second wheels supporting a conveyor belt carrying the material in the treatment room, and the temperature control device is in a heat transfer connection with the treatment room.

In the method according to the invention, wall structures of the processing device constitute a first tubular part containing a first part of the conveyor belt being between the first and second wheels and a second tubular part containing a second part of the conveyor belt being between the first and second wheels, where the first tubular part forms at least a part of the treatment room in which the temperature treatment takes place.

A method according to an exemplifying and non-limiting embodiment comprises controlling a gas-content inside the treatment room. The gas-content inside the treatment room can be controlled to be a low-oxygen gas-content or an oxygen-free gas-content. In a method according to an exemplifying and non-limiting embodiment, the gas-content of the treatment room is controlled by supplying gas representing the desired gas-content from one or more pressurized gas bottles via one or more control valves to the interior room of the processing device. The supplied gas may comprise for example nitrogen, carbon dioxide, helium, and/or argon.

In a method according to an exemplifying and non-limiting embodiment, the inlet of the processing device comprises a first closing system configured to close the inlet to reduce gas leakage to and from the interior room of the processing device, and the outlet of the processing device comprises a second closing system configured to close the outlet to reduce gas leakage to and from the interior room.

In a method according to an exemplifying and non-limiting embodiment, each of the first and second closing systems comprises a paddlewheel placed in a cylindrical chamber so that tips of vanes of the paddlewheel move along a wall of the cylindrical chamber. The cylindrical chamber has a supply aperture for receiving material, and an exit aperture for removing the material from the cylindrical chamber.

In a method according to an exemplifying and non-limiting embodiment, the conveyor belt of the processing device comprises transverse ridges which push the material to be treated in a movement direction of the conveyor belt.

The specific examples provided in the description given above should not be construed as limiting. Therefore, the invention is not limited merely to the exemplifying and non-limiting embodiments described above. Lists and groups of examples provided in the description are not exhaustive unless otherwise explicitly stated.

## Claims

1. A processing device for temperature treatment, the processing device comprising:
- wall structures (101) defining an interior room (102),
- a temperature control device (103) configured to control temperature of a treatment room (104) being a part of the interior room,
- an inlet (105) configured to supply material to be treated to a first end of the treatment room,
- a conveyor belt (106) constituting a closed loop and configured to transfer the material inside the treatment room from the first end of the treatment room to a second end of the treatment room, and
- an outlet (107) configured to remove the temperature treated material from the second end of the treatment room,
wherein the interior room (102) contains a drive mechanism configured to drive the conveyor belt, the drive mechanism comprising a first wheel (108) supporting the conveyor belt at the first end of the treatment room and a second wheel (109) supporting the conveyor belt at the second end of the treatment room, **characterized in that** the wall structures are configured to exclude a room (110) being between the first and second wheels out from the interior room so that the wall structures are configured to constitute a first tubular part (111) containing a first part of the conveyor belt being between the first and second wheels and a second tubular part (112) containing a second part of the conveyor belt being between the first and second wheels, the first tubular part forming at least a part of the treatment room.

2. A processing device according to claim 1, wherein the temperature control device (103) is located outside the interior room and between the first and second wheels, and the temperature control device is configured to be in a heat transfer connection with the treatment room.

3. A processing device according to claim 1 or 2, wherein the processing device comprises a gas-content control system (113) configured to control a gas-content inside the treatment room.

4. A processing device according to claim 3, wherein the gas-content control system (113) comprises at least one pressurized gas bottle configured supply, to the interior room, gas representing a desired gas-content inside the treatment room.

5. A processing device according to any one of claims 1-4, wherein the inlet comprises a first closing system (214, 314) configured to close the inlet to reduce gas leakage to and from the interior room, and the outlet comprises a second closing system configured to close the outlet to reduce gas leakage to and from the interior room.

6. A processing device according to claim 5, wherein each of the first and second closing systems comprises a paddlewheel (216) placed in a cylindrical chamber (217) so that tips of vanes of the paddlewheel move along a wall of the cylindrical chamber, and the cylindrical chamber has a supply aperture for receiving the material and an exit aperture for removing the material from the cylindrical chamber.

7. A processing device according to any one of claims 1-6, wherein the conveyor belt comprises transverse ridges (120) configured to push the material in a movement direction of the conveyor belt.

8. A method for temperature treatment of material, the method comprising:
- supplying (401) the material to an inlet of a processing device for temperature treatment, and
- receiving (402) the temperature treated material from an outlet of the processing device,
**characterized in that** the processing device is a processing device according to any one of claims 1-7.

9. A method according to claim 8, wherein the material supplied to the inlet of the processing device is wood and the temperature treated material received from the outlet of the processing device is charcoal.

## Patentansprüche

1. Bearbeitungsvorrichtung zur Temperaturbehandlung, wobei die Bearbeitungsvorrichtung umfasst:
- Wandstrukturen (101), die einen Innenraum (102) definieren,
- eine Temperatursteuerungsvorrichtung (103), die eingerichtet ist, Temperatur eines Behandlungsraums (104) zu steuern, der ein Teil des Innenraums ist,
- einen Einlass (105), der eingerichtet ist, zu behandelndes Material zu einem ersten Ende des Behandlungsraums zu leiten,
- ein Förderband (106), das eine geschlossene Schleife bildet, und eingerichtet ist, das Material im Inneren des Behandlungsraums von dem ersten Ende des Behandlungsraums zu einem zweiten Ende des Behandlungsraums zu überführen, und
- einen Auslass (107), der eingerichtet ist, das temperaturbehandelte Material von dem zweiten Ende des Behandlungsraums zu entfernen,
wobei der Innenraum (102) einen Antriebsmechanismus enthält, der eingerichtet ist, das Förderband anzutreiben, der Antriebsmechanismus ein erstes Rad (108), das das Förderband an dem ersten Ende des Behandlungsraums stützt, und ein zweites Rad (109), das das Förderband an dem zweiten Ende des Behandlungsraums stützt, umfasst, **dadurch gekennzeichnet, dass** die Wandstrukturen eingerichtet sind, einen Raum (110) zwischen dem ersten und zweiten Rad von dem Innenraum auszuschließen, sodass die Wandstrukturen eingerichtet sind, ein erstes rohrförmiges Teil (111), das einen ersten Teil des Förderbands enthält, der sich zwischen dem ersten und zweiten Rad befindet, und ein zweites rohrförmiges Teil (112) zu bilden, das einen zweiten Teil des Förderbands **enthält,** der sich zwischen dem ersten und zweiten Rad befindet, wobei das erste rohrförmige Teil mindestens einen Teil des Behandlungsraums bildet.

2. Bearbeitungsvorrichtung nach Anspruch 1 , wobei sich die Temperatursteuerungsvorrichtung (103) außerhalb des Innenraums und zwischen dem ersten und zweiten Rad befindet und die Temperatursteuerungsvorrichtung eingerichtet ist, in einer Wärmeaustauschverbindung mit dem Behandlungsraum zu sein.

3. Bearbeitungsvorrichtung nach Anspruch 1 oder 2, wobei die Bearbeitungsvorrichtung ein Gasgehaltsteuerungssystem (113) umfasst, das eingerichtet ist, einen Gasgehalt im Inneren des Behandlungsraums zu steuern.

4. Bearbeitungsvorrichtung nach Anspruch 3, wobei das Gasgehaltsteuerungssystem (113) mindestens eine druckbeaufschlagte Gasflasche umfasst, die eingerichtet ist, dem Innenraum Gas zuzuleiten, das einen gewünschten Gasgehalt im Inneren des Behandlungsraums darstellt.

5. Bearbeitungsvorrichtung nach einem der Ansprüche 1-4, wobei der Einlass ein erstes Verschlusssystem (214, 314) umfasst, das eingerichtet ist, den Einlass zu verschließen, um Gasaustritt zu und von dem Innenraum zu verringern, und der Auslass ein zweites Verschlusssystem umfasst, das eingerichtet ist, den Auslass zu verschließen, um Gasaustritt zu und von dem Innenraum zu verringern.

6. Bearbeitungsvorrichtung nach Anspruch 5, wobei jedes des ersten und zweiten Verschlusssystems ein Schaufelrad (216) umfasst, das in einer zylindrischen Kammer (217) platziert ist, so dass sich Spitzen von Schaufeln des Schaufelrads entlang einer Wand der zylindrischen Kammer bewegen, und die zylindrische Kammer eine Zuleitungsöffnung zum Aufnehmen des Materials und eine Austrittsöffnung zum Entfernen des Materials aus der zylindrischen Kammer hat.

7. Bearbeitungsvorrichtung nach einem der Ansprüche 1-6, wobei das Förderband Querstege (120) umfasst, die eingerichtet sind, das Material in einer Bewegungsrichtung des Förderbands zu schieben.

8. Verfahren zur Temperaturbehandlung von Material, wobei das Verfahren umfasst:
- Zuleiten (401) des Materials zu einem Einlass einer Bearbeitungsvorrichtung zur Temperaturbehandlung, und
- Aufnehmen (402) des temperaturbehandelten Materials von einem Auslass der Bearbeitungsvorrichtung,
**dadurch gekennzeichnet, dass** die Bearbeitungsvorrichtung eine Bearbeitungsvorrichtung nach einem der Ansprüche 1-7 ist.

9. Verfahren nach Anspruch 8, wobei das Material, das dem Einlass der Bearbeitungsvorrichtung zugeleitet wird, Holz ist und das temperaturbehandelte Material, das von dem Auslass der Bearbeitungsvorrichtung aufgenommen wird, Holzkohle ist.

## Revendications

1. Dispositif de traitement destiné au traitement de la température, le dispositif de traitement comprenant :
- des structures murales (101) définissant une pièce intérieure (102),
- un dispositif de contrôle de la température (103) configuré pour contrôler la température d'une pièce de traitement (104) faisant partie de la pièce intérieure,
- une entrée (105) configurée pour fournir le matériau à traiter à une première extrémité de la pièce de traitement,
- une bande de transport (106) constituant une boucle fermée et configurée pour transférer le matériau à l'intérieur de la pièce de traitement depuis la première extrémité de la pièce de traitement jusqu'à une deuxième extrémité de la pièce de traitement, et
- une sortie (107) configurée pour évacuer le matériau traité par température de la deuxième extrémité de la pièce de traitement,
dans lequel la pièce intérieure (102) contient un mécanisme d'entraînement configuré pour entraîner la bande de transport, le mécanisme d'entraînement comprenant une première roue (108) supportant la bande de transport au niveau de la première extrémité de la pièce de traitement et une deuxième roue (109) supportant la bande de transport au niveau de la deuxième extrémité de la pièce de traitement, **caractérisé en ce que** les structures murales sont configurées pour exclure une pièce (110) étant située entre la première et la deuxième roue à l'extérieur de la pièce intérieure de sorte que les structures murales sont configurées pour constituer une première partie tubulaire (111) contenant une première partie de la bande de transport étant située entre la première et la deuxième roue et une deuxième partie tubulaire (112) contenant une deuxième partie de la bande de transport étant située entre la première et la deuxième roue, la première partie tubulaire formant au moins une partie de la pièce de traitement.

2. Dispositif de traitement selon la revendication 1, dans lequel le dispositif de contrôle de température (103) est situé à l'extérieur de la pièce intérieure et entre les première et deuxième roues, et le dispositif de contrôle de température est configuré pour être en connexion de transfert de chaleur avec la pièce de traitement.

3. Dispositif de traitement selon la revendication 1 ou la revendication 2, dans lequel le dispositif de traitement comprend un système de contrôle de la teneur en gaz (113) configuré pour contrôler la teneur en gaz à l'intérieur de la pièce de traitement.

4. Dispositif de traitement selon la revendication 3, dans lequel le système de contrôle de la teneur en gaz (113) comprend au moins une bouteille de gaz sous pression configurée pour fournir à la pièce intérieure un gaz représentant une teneur en gaz souhaitée à l'intérieur de la pièce de traitement.

5. Dispositif de traitement selon l'une quelconque des revendications 1 à 4, dans lequel l'entrée comprend un premier système de fermeture (214, 314) configuré pour fermer l'entrée afin de réduire les fuites de gaz vers et depuis la pièce intérieure, et la sortie comprend un deuxième système de fermeture configuré pour fermer la sortie afin de réduire les fuites de gaz vers et depuis la pièce intérieure.

6. Dispositif de traitement selon la revendication 5, dans lequel chacun des premier et deuxième systèmes de fermeture comprend une roue à aubes (216) placée dans une chambre cylindrique (217) de telle sorte que les extrémités des aubes de la roue à aubes se déplacent le long d'une paroi de la chambre cylindrique, et la chambre cylindrique comporte une ouverture d'alimentation pour recevoir le matériau et une ouverture de sortie pour retirer le matériau de la chambre cylindrique.

7. Dispositif de traitement selon l'une quelconque des revendications 1 à 6, dans lequel la bande de transport comprend des nervures transversales (120) configurées pour pousser le matériau dans une direction de déplacement de la bande de transport.

8. Procédé de traitement thermique d'un matériau, le procédé comprenant :
- l'alimentation (401) du matériau vers une entrée d'un dispositif de traitement pour un traitement thermique, et
- la réception (402) du matériau traité thermiquement depuis une sortie du dispositif de traitement,
**caractérisé en ce que** le dispositif de traitement est un dispositif de traitement selon l'une quelconque des revendications 1 à 7.

9. Procédé selon la revendication 8, dans lequel le matériau fourni à l'entrée du dispositif de traitement est du bois et le matériau traité thermiquement reçu depuis la sortie du dispositif de traitement est du charbon de bois.
